Europäisches Patentamt

European Patent Office

Office européen des brevets

(19)

(11) Numéro de publication: **0 085 008**
A1

# (12) DEMANDE DE BREVET EUROPEEN

(21) Numéro de dépôt: **83400154.7**

(22) Date de dépôt: **21.01.83**

(51) Int. Cl.³: **G 05 B 19/33**, B 25 J 3/00

(30) Priorité: **27.01.82 FR 8201235**

(43) Date de publication de la demande: **03.08.83**
**Bulletin 83/31**

(84) Etats contractants désignés: **BE CH DE GB IT LI NL SE**

(71) Demandeur: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Mouhamed, Mayez Al, c/o Moktar Al Assaad, Talkalakh (SY)**

(74) Mandataire: **Mongrédien, André et al, c/o BREVATOME 25, rue de Ponthieu, F-75008 Paris (FR)**

(54) **Structure de commande analogique pour boucles d'asservissement de la position en rotation d'un moteur à charge inertielle variable.**

(57) Structure hybride, à commande analogique pour boucle d'asservissement de la position en rotation ($\Theta$) d'un moteur (4) dont la charge inertielle (J) ramenée sur l'axe de rotation est variable.

Cette structure comprend des moyens (7, 8, 2) pour adapter instantanément, lors de chaque variation de la charge inertielle ramenée, les valeurs du gain G et de l'amortissement $\beta$ pour la rotation réelle $\Theta_r$ du moteur asservi (4) reste, à un pourcentage près défini, égal à l'angle de consigne $\Theta_c$.

FIG. 4

EP 0 085 008 A1

ACTORUM AG

La présente invention se rapporte d'une façon générale aux domaines des asservissements en position de systèmes articulés dont l'inertie varie en fonction de l'état du système. C'est le cas notamment des manipulateurs articulés, munis d'organes moteurs rotatifs quelconques (électrique, hydraulique ou pneumatique) ou de certaines machines outils. Dans des appareils de ce genre, l'inertie ramenée à l'axe du moteur de commande, dépend bien évidemment de l'état géométrique du système articulé ainsi que de la ou des charges massiques que celui-ci est amené à charger ou à véhiculer. L'invention a trait plus précisément au problème de l'asservissement à une valeur de consigne $\theta_c(t)$ de l'angle de rotation réel $\theta_r(t)$ de l'axe du moteur de commande de l'appareil.

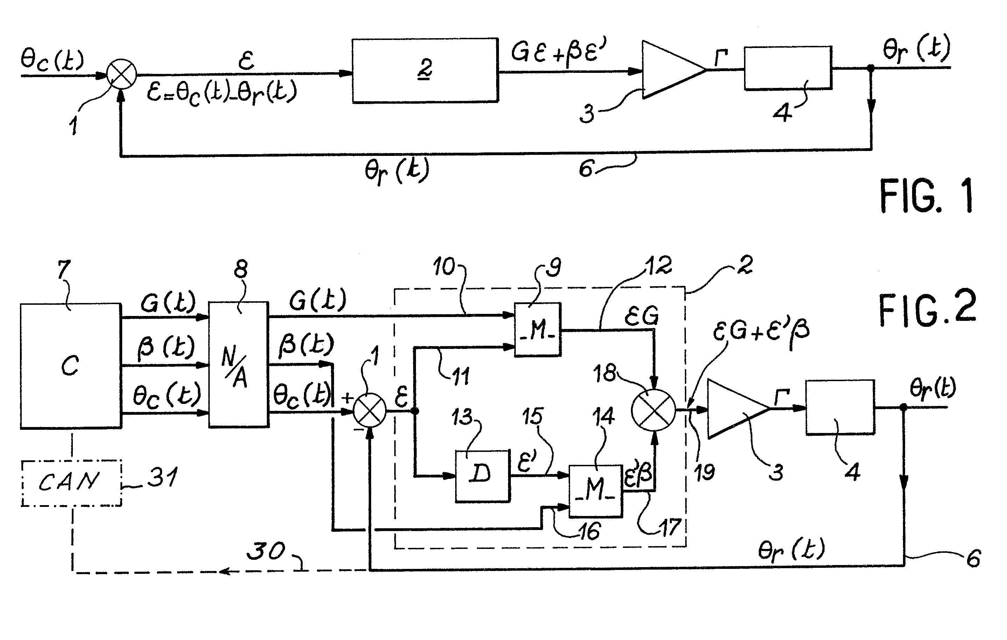

De tels asservissements sont généralement réalisés jusqu'ici à l'aide d'une structure analogique émettant un signal de commande du type proportionnel et dérivé, c'est-à-dire se composant de deux termes dont l'un est proportionnel au signal d'erreur et l'autre à sa dérivée. Une telle structure d'asservissement connue est représentée sur la figure 1 qui montre comment, à l'aide du sommateur 1 qui reçoit d'une part le signal angulaire de consigne $\theta_c(t)$ et d'autre part le signal $\theta_r(t)$ correspondant à la valeur réelle de l'angle de rotation d'un moteur, on constitue le signal d'erreur $\mathcal{E} = \theta_c(t) - \theta_r(t)$. Ce signal est introduit dans un correcteur 2 qui délivre à la sortie un signal analogique de la forme $G\mathcal{E} + \beta\mathcal{E}'$ dans laquelle G et $\beta$ sont le gain et l'amortissement du système correcteur 2, choisis de façon expérimentale, comme il sera expliqué plus loin.

Le signal analogique $G\mathcal{E} + \beta\mathcal{E}'$ étant ensuite introduit dans un amplificateur de puissance 3 qui applique un couple $\mathcal{C}$ au moteur 4. Un capteur analogique

B 7511-3 AM

relève sur l'axe du moteur 4, la valeur instantanée de $\theta_r(t)$ et l'envoie par la boucle de rétroaction 6 à l'entrée négative du sommateur 1.

L'équation fondamentale de la dynamique appliquée à l'axe du moteur 4, permet d'écrire l'équation (1) suivante :

$$J \frac{d^2\theta_r}{dt^2} + \beta\xi' + G\xi = 0 \qquad (1)$$

équation dans laquelle $\xi'$ est la dérivée $d\xi/dt$ par rapport au temps du signal d'erreur $\xi$. La théorie et l'expérience montrent que les performances, c'est-à-dire les modes de comportement d'un tel système (oscillatoire amorti, critique, ou apériodique) dépendent de la valeur respectivement $<0$, nulle ou $>0$ du discriminant $\Delta$ de l'équation précédente qui est $\Delta = \beta^2 - 4JG$.

On conçoit qu'une structure de commande asservie, conforme au schéma de la figure 1, pose des problèmes pratiquement insolubles lorsque l'inertie ramenée au niveau de l'axe du moteur 4, est elle-même variable en fonction de la configuration du système articulé, puisque, dans ce cas, le discriminant $\Delta$ varie également en fonction de cette même configuration et que les performances du système d'asservissement ne sont pas constantes. En d'autres termes, la variation de l'inertie J due aux variations de la configuration du système articulé et des charges massiques soulevées et transportées, entraîne une désadaptation des gains G et des amortissements $\beta$, dont les valeurs ont été choisies expérimentalement pour une valeur déterminée $J_0$ de l'inertie J ramenée sur l'axe du moteur 4. Il en résulte en fonctionnement des écarts intolérables par rapport aux trajectoires de consigne prescrites pour l'appareil commandé ; de plus, un système de régulation tel que

B 7511-3 AM

celui de la figure 1 est peu commode à utiliser en robotique en raison des effets d'accélération pour lesquels on ne prévoit pas de correction, car l'asservissement conçu dans la commande de la figure 1 est une approximation du premier ordre qui néglige complètement les effets d'accélération. Ces défauts sont particulièrement gênants lorsque le système articulé à commander est par exemple un robot à bras articulés possédant plusieurs moteurs actionnant des articulations successives dont les erreurs de position peuvent ainsi s'ajouter dangereusement.

Pour résoudre ce problème, et compenser les variations de l'inertie par des modifications du gain et de l'amortissement en cours de fonctionnement, l'invention propose de réaliser un couple moteur de la forme :

$$\Gamma_{\mu} = J(G\varepsilon + \beta\varepsilon') \qquad (2)$$

ce qui conduirait à une équation en boucle fermée de la forme :

$$\frac{d^2\theta_r}{dt^2} + \beta\varepsilon' + G\varepsilon = 0 \qquad (3)$$

dans laquelle la variable inertielle J a disparu.

Un asservissement de ce genre, qui permettrait de corriger en outre les effets d'accélération en ajoutant un terme lié à la dérivée seconde du signal de consigne de position, pourrait évidemment être élaboré sur un calculateur numérique qui, à partir de la position angulaire de l'axe du moteur relevée par un codeur digital monté sur l'arbre de ce dernier, calculerait la grandeur du couple selon l'équation (2) précédente et l'enverrait sur un convertisseur numérique analogique. Le signal analogique correspondant pourrait alors être utilisé comme entrée des amplificateurs de puissance qui le transformeraient en un signal capable d'actionner le moteur en lui appliquant exactement le couple $\Gamma_\mu$.

Cette solution théoriquement possible se heurte néanmoins dans la pratique à un grand nombre d'inconvénients majeurs qui la rendent presque inutilisable pour les raisons suivantes :

1. Tout le matériel de robotique actuellement en service est conçu pour fonctionner en asservissement analogique et il serait nécessaire de reprendre complètement les câblages et les potentiomètres existants pour adapter le matériel à un fonctionnement numérique. Par ailleurs, il est bien connu que les commandes numériques présentent une sensibilité parfois très génantes vis-à-vis des parasites extérieurs de nature diverse.

2. En cas d'incident sur le calculateur, provoquant son arrêt, il s'ensuivrait un "gel" des ordres d'asservissement et le maintien à leur valeur au moment de l'incident des courants appliqués à la commande de l'arbre moteur, ce qui pourrait conduire à des mouvements catastrophiques pour les manipulateurs et leur environnement, puisque les mouvements en cours au moment de la panne continueraient, théoriquement du moins, de façon illimitée.

3. La structure de tels asservissements nécessiterait le recours aux techniques du multi-traitement (en anglais multiprocessing) et serait donc complexe à réaliser.

4. La rapidité des calculateurs numériques actuels n'est pas suffisante généralement pour assurer dans de bonnes conditions l'asservissement d'un robot possédant un certain nombre d'articulations en série (on peut calculer qu'il faudrait au moins 25 ms pour le calcul des coefficients d'inertie et l'élaboration de

la commande $\Gamma'_\mu$, dans le cas d'un dispositif à six degrés de liberté, alors qu'un fonctionnement correct exigerait que l'ensemble des ordres soit exécuté en moins de 3 ou 4 ms).

5. Les codeurs numériques sont en général très volumineux et de plus sensibles aux rayonnements ionisants, ce qui peut être gênant lorsque le télémanipulateur ou le robot employé fonctionne dans une enceinte soumise à ces rayonnements.

Pour toutes ces raisons par conséquent, un asservissement numérique calculant à chaque instant, selon la loi définie en (2), la grandeur du couple moteur à réaliser pour compenser exactement les variations de la charge inertielle en agissant sur les coefficients de gains et d'amortissement n'est pas pratiquement réalisable.

La présente invention a pour objet une structure de commande analogique pour boucle d'asservissement de la position en rotation $\theta_r$ d'un moteur dont la charge inertielle J ramenée sur l'axe de rotation est variable, qui permet d'assurer de façon simple, malgré les variations instantanées de l'inertie J, une adaptation des paramètres de gain G et d'amortissement $\beta$ de la chaîne d'asservissement de façon telle que les performances du système restent voisines, à un pourcentage de tolérance près, des performances théoriques définies par la consigne $\theta_c$ de l'angle de rotation.

Cette structure, du type de celles qui élaborent pour la commande du couple ($\mathcal{C}$) d'un moteur, un signal analogique comportant au moins deux termes correcteurs de la forme $G\mathcal{E} + \beta\mathcal{E}'$, G et $\beta$ représentant le gain et l'amortissement de la boucle d'asservissement pour une valeur $J_0$ de la charge inertielle, $\mathcal{E}$ le signal d'erreur de position angulaire $\theta$ et $\mathcal{E}'$ sa dérivée $\frac{d\mathcal{E}}{dt}$ par rapport au temps, se caractérise en ce qu'elle comprend des moyens pour adapter instantanément, lors de chaque variation de la charge inertielle ramenée, les valeurs du gain G et de l'amortissement $\beta$ pour que la rotation réelle $\theta_r$ du moteur asservi reste, à un pourcentage près défini, égal à l'angle de consigne $\theta_c$.

La présence des moyens d'adaptation instantanée permet par conséquent de s'assurer que le signe du discriminant $\Delta = \beta^2 - 4\,JG$ reste le même c'est-à-dire que l'on ne change pas de régime oscillatoire pour la réalisation de l'ordre de consigne, mais également que les écarts possibles entre l'angle de consigne $\theta_c$ et l'angle réel $\theta_r$ de rotation du moteur dus à la désadaptation partielle des coefficients de gain G et d'amortissement $\beta$, ne dépassent pas une certaine limite relative que l'on s'est fixée par avance.

Selon l'invention et de façon plus précise, lesdits moyens d'adaptation comprennent en combinaison :

- une unité de contrôle numérique qui garde en mémoire les valeurs $\theta_c = f(t)$ de la consigne d'angle de rotation, reçoit les données sur l'évolution et la charge du moteur, et qui, à partir, d'un programme établi et des données précédentes, calcule les valeurs successives de l'inertie ramenée J, et, pour chaque valeur de celle-ci, les valeurs G et $\beta$ pour maintenir l'adaptation des variables $\beta$, G et J à un pourcentage défini près ;

- un convertisseur numérique-analogique qui transforme les grandeurs précédentes en signaux analogiques ;

- une boucle de rétroaction permettant de recueillir la valeur réelle $\theta_r$ de l'angle de rotation du moteur et d'établir, dans un premier sommateur, le signal d'erreur instantané $\varepsilon = \theta_c(t) - \theta_r(t)$ ;

- un circuit correcteur chargé d'élaborer le signal analogique représentatif de la somme $G\varepsilon + \beta\varepsilon'$ et se

B 7511-3 AM

0085008

composant de deux branches en parallèle recevant à l'entrée le signal $\varepsilon$, la première branche comportant un premier multiplicateur analogique à deux entrées recevant les signaux $\varepsilon$ et G, la deuxième branche comportant un différentiateur produisant le signal dérivé $\varepsilon'$ et un deuxième multiplicateur analogique à deux entrées recevant les signaux $\varepsilon'$ et $\beta$, les deux branches en parallèle aboutissant à un deuxième sommateur ;

- la sortie de ce deuxième sommateur alimentant l'amplificateur de puissance et l'actionneur chargé d'appliquer au moteur le couple correspondant.

Le recours à un calculateur numérique permet d'effectuer dans les délais voulus à chaque instant et en fonction de la configuration du système articulé asservi ainsi que des charges qu'il véhicule, le calcul de l'inertie du système J ramenée sur l'axe du moteur, ainsi que celui du gain G et de l'amortissement $\beta$ pour maintenir l'adaptation des variables $\beta$, G et J à un pourcentage défini près. Les signaux proportionnels $G\varepsilon$ et dérivés $\beta\varepsilon'$ sont construits à partir de multiplicateurs analogiques à deux entrées d'un type en soi connu. Conformément à l'invention, seul le calculateur qui constitue l'unité de commande travaille en numérique, un convertisseur numérique analogique assurant la liaison avec tout le reste de la chaîne d'asservissement qui fonctionne elle dans un système analogique permettant son utilisation sur un matériel courant du commerce, sans aucune modification. Le programme placé dans le calculateur de l'unité de commande permet de s'assurer que le discriminant $\Delta$ du système reste constant, à une certaine valeur relative près, définie d'avance.

Selon un mode de mise en oeuvre spécialement

B 7511-3 AM

intéressant de la présente invention, la structure analogique est conçue pour corriger de façon exacte les variations de l'adaptation des coefficients de gain G et d'amortissement β en fonction des variations de l'inertie ramenée J provoquée par les changements de configuration du système asservi et des masses qu'il met en mouvement de façon à obtenir une équation en boucle fermée du système d'asservissement de la forme (3) définie précédemment. Cette structure analogique se caractérise en ce que, l'unité de contrôle précédente calcule en outre les produits JG et Jβ et les injecte respectivement après passage dans le convertisseur numérique-analogique, dans l'entrée de gain du premier multiplicateur et dans l'entrée d'amortissement du deuxième multiplicateur.

La multiplication, réalisée dans les multiplicateurs électroniques analogiques des grandeurs J, G et β, permet de rendre l'équation en boucle fermée (3) indépendante du coefficient d'inertie J ce qui assure une adaptation parfaite des gains et des amortissements pour chaque configuration particulière du système articulé asservi.

Dans une variante perfectionnée du mode de mise en oeuvre précédent, on améliore encore la nature de l'asservissement obtenu en corrigeant les effets dus à l'accélération angulaire du moteur de commande. A cet effet et conformément à l'invention l'unité de contrôle calcule en outre la quantité $Jd^2\theta c/dt^2$ qui est introduite, après codage analogique dans le convertisseur numérique analogique, dans le deuxième sommateur situé à la sortie du circuit correcteur.

La possibilité ainsi offerte par le calculateur numérique de calculer, en un temps suffisamment court, la dérivée seconde de l'angle de rotation du moteur par rapport au temps, permet de tenir compte des effets d'accélaration angulaire que la régulation de l'art antérieur du type à deux termes proportionnel et dérivée ne permettait pas de prendre en compte. Il en résulte un perfectionnement important de la fiabilité du système lorsque les accélérations angulaires des moteurs de commande du système asservi atteignent, ce qui est fréquemment le cas, des valeurs non négligeables.

L'unité de contrôle de la structure analogique d'asservissement, selon la présente invention, peut être un calculateur numérique d'une nature quelconque ; il est toutefois indiqué d'utiliser à cet effet un microprocesseur.

De toute façon, l'invention sera mieux comprise en se référant à la description de trois exemples de réalisation qui seront décrits ci-après en se référant aux figures 1 à 6 sur lesquelles :

- la figure 1 représente le schéma connu d'un asservissement classique du genre proportionnel dérivé.

- la figure 2 représente une structure pour boucle d'asservissement selon la présente invention dans laquelle on corrige partiellement, à un certain pourcentage près, les désadaptations du système en fonction des variations de l'inertie J ;

- la figure 3 représente un schéma de mise en oeuvre d'une structure pour boucle d'asservissement selon l'invention dans lequel on corrige exactement les défauts d'adaptation du gain et de l'amortissement du système d'asservissement en fonction des variations de l'inertie ramenée J du système ;

- la figure 4 représente une structure pour boucle d'asservissement, objet de l'invention, qui reproduit les éléments de la figure 3 en y ajoutant de plus une correction des accélérations angulaires.

- la figure 5 (5a, 5b, 5c) montre l'évolution

B 7511-3 AM

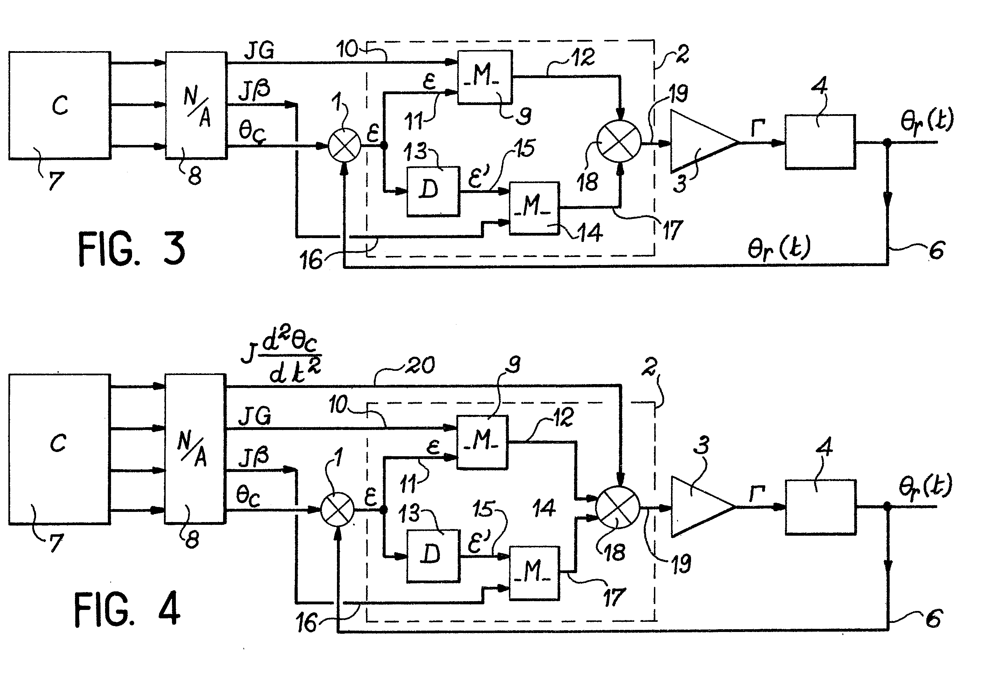

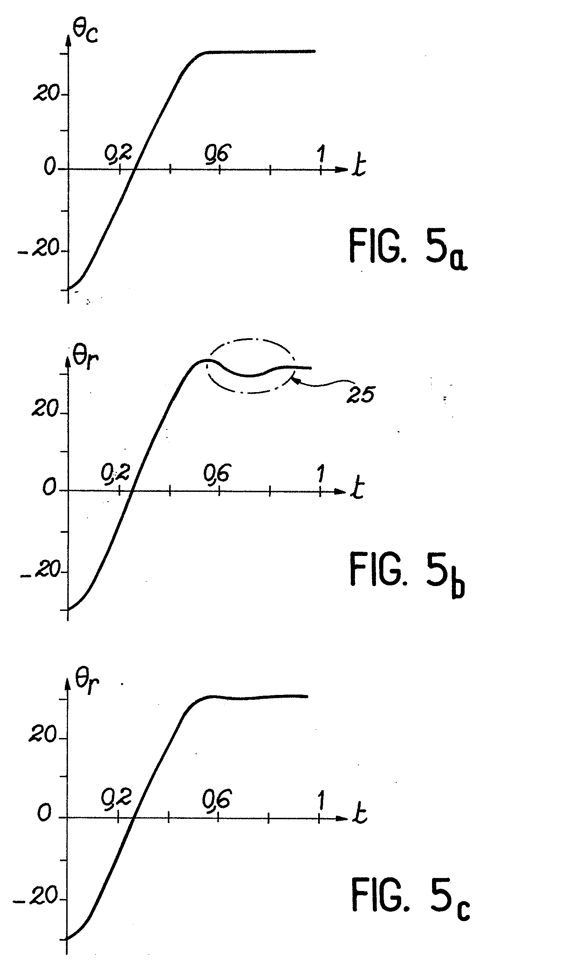

dans le temps d'une consigne angulaire $\theta_c$ (figure 5a) par le système d'asservissement de la figure 1 (figure 5b) et par le système de la figure 4 (figure 5c). Sur les figures 5a, 5b et 5c les angles sont exprimés en ordonnées et en degrés et les temps en abscisses et en secondes.

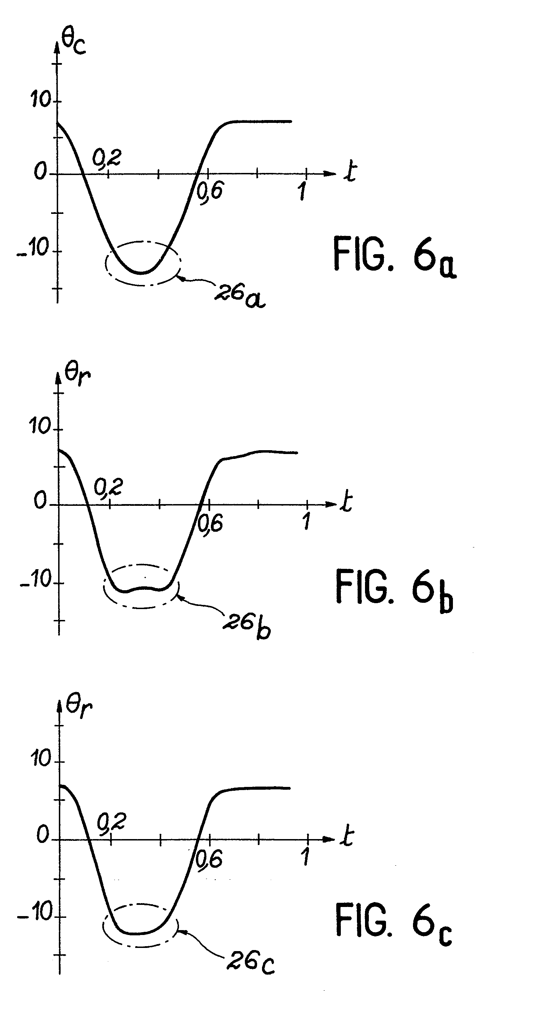

- la figure 6 (6a, 6b, 6c) montre l'évolution dans le temps d'une consigne angulaire $\theta_c$ (figure 6a) par le système d'asservissement de la figure 1 (figure 6b) et par le système de la figure 4 (figure 6c). Sur les figures 6a, 6b et 6c les angles sont exprimés en ordonnées et en degrés et les temps en abscisses et en secondes.

Sur la figure 1 destinée à rappeler le schéma connu d'une commande analogique à boucle d'asservissement du type proportionnel dérivé, on voit le sommateur 1 qui reçoit le signal de consigne angulaire $\theta_c(t)$ sur son entrée positive et, par la boucle d'asservissement 6, le signal $\theta_r(t)$, représentatif de la rotation réelle du moteur 4 à asservir, sur son entrée négative. Le sommateur 1 élabore donc le signal d'erreur $\xi(t)=\theta_c(t)-\theta_r(t)$ que le circuit correcteur 2 transforme en un signal à deux termes, $G\xi+\beta\xi'$, $G$ et $\beta$ étant les valeurs constantes du gain et de l'amortissement de la boucle d'asservissement et $\xi'$ la dérivée $\frac{d\xi}{dt}$ du signal d'erreur par rapport au temps. Ce signal à deux termes est introduit dans l'amplificateur de puissance 3 appliquant au moteur 4 le couple voulu. Une telle commande a des performances modestes et de plus variables lorsque l'inertie du système commandé par le moteur 4 varie, car il en résulte une désadaptation des coefficients de gain $G$ et d'amortissement $\beta$, fixés ici à une valeur constante une fois pour toutes.

Sur le premier mode de réalisation de la structure analogique pour boucle d'asservissement objet de l'invention, représenté sur la figure 2, on retrouve comme dans la figure 1, le moteur 4 alimenté par
l'amplificateur de puissance 3. Comme sur la figure 1,
la ligne de rétroaction 6 permet de ramener à l'entrée
négative du sommateur 1 la valeur instantanée $\Theta_r(t)$ de
la position angulaire de l'arbre du moteur 4. Dans cette première variante de mise en oeuvre conforme à l'invention, une unité de contrôle composée essentiellement
d'un calculateur numérique 7, qui garde en mémoire les
positions angulaires de consigne $\Theta_c(t)$ calcule à chaque
instant la valeur exacte de l'inertie J ramenée sur
l'axe du moteur en fonction de la configuration spatiale du robot articulé qu'il commande ainsi que des masses qu'il est chargé de déplacer. A partir de cette
valeur de l'inertie ramenée J, il calcule également
pour chaque configuration du robot asservi, des valeurs
G et β du gain et de l'amortissement, de façon à maintenir l'adaptation de ces trois variables à un pourcentage défini près. Selon l'invention, un convertisseur
numérique analogique 8 convertit les grandeurs précédentes en représentation analogique et celles-ci sont
utilisées de la façon suivante pour alimenter le correcteur 2 chargé d'élaborer le signal d'asservissement
délivré à l'entrée de l'amplificateur de puissance 3.

A cet effet d'abord, un premier sommateur 1
reçoit sur sa borne positive le signal de consigne angulaire $\Theta_c(t)$ et sur sa borne négative, par la voie 6,
la valeur analogique de l'angle réel $\Theta_r(t)$ de position
du moteur 4. Ce sommateur 1 élabore le signal d'erreur $\varepsilon$ qui pénètre dans le correcteur 2 lequel se compose de deux branches en parallèle. La branche représentée sur la partie supérieure du dessin ou première
branche comporte un premier multiplicateur analogique 9
à deux entrées dont la première 10 reçoit le signal G
et la deuxième 11 reçoit le signal $\varepsilon$. Ce multiplicateur
analogique 9 délivre donc en sortie sur la ligne 12 le

B 7511-3 AM

signal analogique $\varepsilon$G. Le correcteur 2 se compose également d'une deuxième branche parallèle à la précédente et comporte un dérivateur 13 et un deuxième multiplicateur analogique 14 à deux entrées. Le dérivateur 13 construit la fonction $\varepsilon' = d\varepsilon/dt$ laquelle est injectée sur la première entrée 15 du multiplicateur 14. La deuxième entrée 16 de ce multiplicateur 14 reçoit directement du convertisseur numérique analogique 8, la grandeur analogique $\beta$. Sur la ligne de sortie 17 du multiplicateur 14, se trouve par conséquent présent le signal analogique $\varepsilon'\beta$. Les deux lignes 12 et 17 aboutissent à un deuxième sommateur 18 qui délivre en sortie sur la ligne 19 alimentant l'amplificateur de puissance 13, le signal analogique de correction globale $\varepsilon$G+$\varepsilon'\beta$, dans lequel G et $\beta$ varient en fonction de la configuration du système articulé asservi et des masses qu'il transporte c'est-à-dire en fin de compte en fonction du temps.

La structure de la figure 2 est comme on le voit de type hybride, c'est-à-dire qu'elle utilise pour les calculs rapides une unité de commande 7 de type numérique, mais que toute la chaîne d'asservissement située derrière le convertisseur numérique analogique 8 jusqu'à la commande d'asservissement de l'axe du moteur 4 est de type analogique. Il s'agit bien donc là d'une structure hybride dont la partie proprement commande d'asservissement est analogique et permet d'utiliser au niveau du moteur 4 les matériels (palpeurs, potentiomètres, etc...) habituellement utilisés dans les appareils de ce genre et vendus couramment dans le commerce.

Enfin, le fait que le signal d'asservissement $\varepsilon$G+$\varepsilon'\beta$, injecté par la ligne 19 dans l'amplificateur de puissance 3, est adapté aux variations de G et de $\beta$ permet (à l'inverse de ce qui se produisait dans l'art antérieur décrit sur la figure 1) de contrôler les valeurs que prend le discriminant $\Delta=\beta^2-4\,JG$ de l'équation en boucle fermée définie plus haut et de parvenir, à un pourcentage près défini que l'on peut choisir aussi proche qu'on le souhaite de l'asservissement parfait, à une commande très précise de l'angle réel de position $\Theta_r(t)$ en fonction de l'angle de consigne $\Theta_c(t)$.

Dans une variante de réalisation de la figure 2, le calculateur numérique 7, au lieu de partir des positions angulaires de consigne $\Theta_c$ pour calculer l'inertie ramenée J, reçoit la valeur $\Theta_r$ instaurée de la position angulaire de l'arbre du moteur 4 par la ligne en pointillé 30 au travers d'un convertisseur analogique numérique 31 disposé sur cette ligne 30.

Dans le schéma de la figure 3, on retrouve exactement les éléments de la figure 2 portant les mêmes nombres de référence. Dans ce cas toutefois, on recherche une adaptation pratiquement exacte des variations du gain G et de l'amortissement $\beta$ pour compenser complètement les variations de la charge inertielle ramenée à l'axe du moteur J pour chaque position de déploiement du robot articulé commandé et chaque valeur des charges manipulées. Pour ce faire, on utilise un système dont l'équation en boucle fermée est donnée par l'équation (3) précédente c'est-à-dire indépendante de la variable inertielle J. C'est pourquoi, l'unité de contrôle 7, qui effectue les mêmes calculs que dans le cas de la structure de la figure 2, élabore en plus les produits instantanés JG et J$\beta$, qui, après transformation en signaux analogiques dans le convertisseur 8, alimentent respectivement l'entrée 10 du premier multiplicateur 9 et l'entrée 16 du second multiplicateur 14.

Le schéma de la figure 3 représente par conséquent une structure conforme à l'invention qui corrige complètement les défauts d'adaptation des gains G et

des amortissements β en fonctionnement, pour toutes les valeurs successives de la masse inertielle J ramenée sur l'axe du moteur 4. On obtient ainsi à l'aide de cette structure un asservissement d'une qualité très supérieure à ceux de l'art antérieur comme on l'illustrera ci-après par quelques figures relevées sur des systèmes réels.

Toutefois, un dernier perfectionnement peut encore être apporté à la structure de la figure 3, et concerne la correction des accélérations angulaires que cette dernière structure n'est pas capable de prendre en compte. A cet effet, une troisième variante de mise en oeuvre de la structure à commande analogique objet de l'invention est représentée sur la figure 4 où l'on retrouve avec les mêmes nombres de références l'ensemble des éléments des figures 2 et 3 auxquels est venue s'ajouter une ligne 20 qui introduit la grandeur analogique $J\, d^2\theta_c/dt^2$ calculée par le calculateur 7 et introduite dans le deuxième sommateur 18.

Pour illustrer les performances obtenues à l'aide des dispositifs des figures 3 et 4, on donnera maintenant des courbes d'enregistrement d'évolution de l'angle d'asservissement réel $\theta_r$ en fonction de l'angle de consigne $\theta_c$.

Les figures 5a, 5b et 5c sont relatives à l'asservissement en rotation d'un moteur à partir d'un angle de consigne $\theta_c$ dont l'évolution souhaitée dans le temps est représentée sur la figure 5a, le temps étant exprimé en secondes et l'angle en degrés. Si l'on effectue l'asservissement à l'aide d'un système proportionnel dérivé connu, du genre de celui que décrit la figure 1, on obtient pour l'angle réel $\theta_r$ la courbe de la figure 5b qui montre des troubles transitoires importants dans la zone 25.

Si l'on utilise pour effectuer le même asservissement le montage de la figure 4, on obtient la courbe d'enregistrement de la figure 5c où l'on voit que les perturbations transistoires de la zone 25 sont, sinon effacées, du moins très fortement atténuées.

Sur les figures 6a, 6b et 6c on montre l'intérêt de la correction supplémentaire de l'accélération angulaire à l'aide d'une structure conforme à celle de la figure 4. La figure 6a montre la variation de consigne $\theta_c$ souhaitée pour un moteur asservi ; la figure 6b montre l'évolution de l'angle de rotation réel $\theta_r$ à l'aide d'un système du type proportionnel dérivé du genre de celui de la figure 1 et la figure 6b montre l'asservissement obtenu et la variation de l'angle réel $\theta_r$ lorsque l'on corrige à la fois les adaptations du gain et de l'amortissement ainsi que les effets d'accélérations. L'observation de la façon dont est reproduite la zone 26a de variation de la courbe de consigne, en 26b et 26c sur les figures 6b et 6c permet d'observer le progrès technique réalisé avec les structures d'asservissement objet de l'invention.

Il est bien entendu que font également partie de l'invention des réalisations manuelles dans lesquelles un calculateur numérique calculerait à chaque instant les inerties J et où un opérateur modifierait à l'aide de boutons de réglage les valeurs du gain G et de l'amortissement $\beta$.

D'autre part, les configurations décrites sur les figures 2, 3 et 4 sont les meilleures réalisables dans l'état actuel de la technique ; mais il est également possible, selon l'invention, d'utiliser un calculateur numérique pour engendrer le signal de commande du moteur 4. La solution analogique décrite est préférée car elle n'est pas sujette aux vibrations du moteur qui accompagnent souvent une réalisation numérique.

00850O8

REVENDICATIONS

1. Structure de commande pour boucle d'asservissement de la position en rotation ($\Theta$) d'un moteur (4) dont la charge inertielle (J) ramenée sur l'axe de rotation est variable, du type de celles qui élaborent pour la détermination du couple ($\rho$) du moteur (4) un signal comportant au moins deux termes correcteurs de la forme $G\epsilon+\beta\epsilon'$, G et $\beta$ représentant le gain et l'amortissement de la boucle d'asservissement pour une valeur $J_0$ de la charge inertielle, $\epsilon$ le signal d'erreur de position angulaire $\Theta$ et $\epsilon'$ sa dérivée par rapport au temps caractérisée en ce qu'elle comprend des moyens (7, 8, 2) pour adapter instantanément, lors de chaque variation de la charge inertielle ramenée, les valeurs du gain G et de l'amortissement $\beta$ pour que la rotation réelle $\Theta_r$ du moteur asservi (4) reste, à un pourcentage près défini, égale à l'angle de consigne $\Theta_c$.

2. Structure hybride de commande analogique selon la revendication 1, caractérisée en ce que lesdits moyens d'adaptation comprennent en combinaison :

- une unité de contrôle numérique (7) qui garde en mémoire les valeurs de l'angle de rotation, reçoit les données sur l'évolution de la charge du moteur (4), et qui, à partir d'un programme établi et des données précédentes, calcule les valeurs successives de l'inertie ramenée J, et, pour chaque valeur de celle-ci les valeurs G et $\beta$ pour maintenir l'adaptation des variables $\beta$, G et J à un pourcentage défini près ;
- un convertisseur numérique-analogique (8) qui transforme les grandeurs précédentes en signaux analogiques ;
- une boucle de rétroaction (6) permettant de recueillir la valeur réelle $\Theta_r$ de l'angle de rotation du

B 7511-3 AM

moteur (4) et d'établir, dans un premier sommateur (1), le signal d'erreur instantané $\varepsilon = \theta_c(t) - \theta_r(t)$ ;

- un circuit correcteur (2) chargé d'élaborer le signal analogique représentatif de la somme $G\varepsilon + \beta\theta'$ et se composant de deux branches en parallèle recevant à l'entrée le signal $\varepsilon$, la première branche comportant un premier multiplicateur analogique (9) à deux entrées (10, 11) recevant les signaux $\varepsilon$ et G, la deuxième branche comportant un différentiateur (13) produisant le signal dérivé $\varepsilon'$ et un deuxième multiplicateur (14) analogique à deux entrées (15, 16) recevant les signaux $'$ et $\beta$, les deux branches en parallèle aboutissant à un deuxième sommateur (18) ;

- la sortie (19) de ce deuxième sommateur (18) alimentant l'amplificateur de puissance (3) chargé d'appliquer au moteur (4) le couple correspondant.

3. Structure selon la revendication 2, caractérisée en ce que pour obtenir une équation en boucle fermée indépendante de la valeur instantanée de l'inertie ramenée J, l'unité de contrôle (7) calcule en outre les produits JG et $J\beta$ et les injecte respectivement, après passage dans le convertisseur numérique-analogique (8), dans l'entrée de gain (10) du premier multiplicateur (9) et dans l'entrée d'amortissement (16) du deuxième multiplicateur (14).

4. Structure selon la revendication 3, caractérisée en ce que pour corriger les effets, dus à l'accélération angulaire, l'unité de contrôle calcule en outre la quantité $Jd^2\theta c/dt^2$ qui est introduite, après codage analogique dans le convertisseur numérique analogique (8), dans le deuxième sommateur (18) situé à la sortie du circuit correcteur (2).

5. Structure selon la revendication 2, caractérisée en ce que l'unité de contrôle est un microprocesseur.

B 7511-3 AM

FIG. 1

FIG.2

0085008

**FIG. 3**

**FIG. 4**

FIG. 5a

FIG. 5b

FIG. 5c

FIG. 6a

FIG. 6b

FIG. 6c

**Office européen
des brevets**

**RAPPORT DE RECHERCHE EUROPEENNE**

Numéro de la demande

EP 83 40 0154

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | DE-A-2 656 433 (FRAUNHOFER-GESELLSCHAFT) *Revendication 1; page 11, lignes 4-26* | 1 | G 05 B 19/33 B 25 J 9/00 |
| A | US-A-3 422 965 (W.LLOYD) *Revendication 1; figure 4* | 1,2,5 | |

|  |  |  | DOMAINES TECHNIQUES RECHERCHES (Int. Cl. 3) |
|---|---|---|---|
|  |  |  | G 05 B B 25 J |

Le présent rapport de recherche a été établi pour toutes les revendications

| Lieu de la recherche | Date d'achèvement de la recherche | Examinateur |
|---|---|---|
| LA HAYE | 07-03-1983 | KOLBE W.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82